Europäisches Patentamt

European Patent Office

Office européen des brevets

(19)

(11) Numéro de publication : **0 671 466 A1**

(12) # DEMANDE DE BREVET EUROPEEN

(21) Numéro de dépôt : **95400090.7**

(22) Date de dépôt : **18.01.95**

(51) Int. Cl.$^6$ : **C12H 1/06**

(30) Priorité : **08.03.94 FR 9402635**

(43) Date de publication de la demande :
**13.09.95 Bulletin 95/37**

(84) Etats contractants désignés :
**AT BE CH DE DK ES FR GB GR IE IT LI LU NL PT SE**

(71) Demandeur : **TECH-SEP**
**25 quai Paul Doumer**
**F-92408 Courbevoie Cédex (FR)**

(72) Inventeur : **Cueille, Georges**
**18 rue de la Tuilerie**
**F-69530 Brignais (FR)**
Inventeur : **Leuliet, Jean-Claude**
**2, rue Brève,**
**Résidence de la Musique - Bât. 11**
**F-59650 Villeneuve d'Ascq (FR)**
Inventeur : **Rene, Frédéric**
**11 cité Résidentielle**
**F-78850 Thivernal-Grignon (FR)**

(74) Mandataire : **Seugnet, Jean Louis**
**RHONE-POULENC CHIMIE,**
**Direction de la Propriété Industrielle,**
**25, Quai Paul Doumer**
**F-92408 Courbevoie Cédex (FR)**

(54) **Microfiltration de la bière.**

(57)    La présente invention concerne un procédé de microfiltration tangentielle de la bière, caractérisée en ce qu'on fait passer la bière à travers une membrane mince - éventuellement supportée - dont la perméabilité membranaire totale, mesurée à l'état neuf, est supérieure à 6 . $10^{-11}$ m$^3$/m$^2$ et dont la porosité est simultanément comprise entre 2,5 et 5 μm.
   Application à la filtration industrielle de la bière issue du réacteur de fermentation et de la bière de garde.

EP 0 671 466 A1

La présente invention concerne un procédé de microfiltration de la bière.

A l'heure actuelle, la bière est devenue une boisson dont la consommation mondiale annuelle est de l'ordre du milliard d'hectolitres et arrive juste en deuxième place des boissons élaborées, derrière le thé.

La plus grande partie de la production mondiale de bière est de la bière de conservation stockée au froid à une température généralement comprise entre 0 et 6°C pour un réfrigérateur courant. Cette bière de conservation est également appelée "*bière de garde*".

Pour assurer sa conservation au froid, la bière provenant de la cuve de fermentation, d'une part, est le plus souvent filtrée sur un filtre garni de Kieselguhr et, d'autre part, subit ensuite une pasteurisation généralement très rapide, appelée "*flash pasteurisation*", qui permet d'obtenir la qualité microbiologique.

L'utilisation de Kieselguhr constitue toutefois une opération onéreuse, longue et polluante, car les opérations discontinues de préparation du gâteau de filtration, de récupération du gâteau par démontage du filtre après fonctionnement, grèvent la productivité et usent le matériel. Cette filtration est en effet généralement effectuée entre 0 et 4 °C, de manière à éliminer les colloïdes qui se forment au froid par adsorption des solutés responsables de la formation des colloïdes.

Cette opération de filtration nécessite les étapes suivantes :
- pré-conditionnement du filtre à partir de Kiesekguhr, de grosse taille, puis de taille plus fine,
- début de la filtration, avec ajout en continu de doses variables de Kieselguhr,
- démontage, nettoyage du filtre et élimination du gâteau de filtration.

Cette variabilité du pouvoir d'arrêt du filtre permet à l'opérateur d'adapter la filtration aux variations des matières premières, aux modifications des levures et de la durée de garde pour obtenir un produit constant.

On consomme généralement environ 140 g de Kieselguhr par hectolitre de bière produite, ce qui - ramené à la production mondiale de bière - correspond à une masse annuelle de 14 000 t., dont 80% sont produites aux USA : le Kieselguhr est donc essentiellement un produit d'importation. Or, un inconvénient majeur réside en ce que les gâteaux usagés de Kiesekguhr ne sont actuellement, ni recyclables, ni valorisables . Il faut donc jeter ces gâteaux de filtration qui, du fait de leur charge organique, représentent des effluents fortement polluants.

Il existe donc un besoin de mise au point d'un système de filtration présentant les avantages suivants :
- démontage aisé et ne nécessitant qu'un entretien réduit,
- permettant de fixer, selon des critères définis, la stabilité colloïdale et microbiologique de la bière finie,
- ne nécessitant pas la mise en oeuvre de Kieselguhr,
- pouvant fonctionner en continu,
- dont l'élément filtrant peut être décolmaté aisément en place, sans démontage.

Un tel système existe et a déjà été décrit dans l'art antérieur : il s'agit de la microfiltration à flux tangentiel, procédé décrit par exemple par US. 5.076 931.

Toutefois, le procédé de microfiltration à flux tangentiel décrit dans l'art antérieur présente 2 inconvénients graves :
- les flux de bière traitée obtenus sont faibles, de l'ordre de 10 à 50 l. $h^{-1}m^{-2}$ comparativement aux valeurs courantes obtenues en brasserie avec les gâteaux de Kieselguhr (200 à 500 l. $h^{-1}m^{-2}$).
- la bière microfiltrée ne présente pas une qualité convenable, à la fois sur l'aspect physico-chimique (notamment teneur en alcool, pH, amertume, trouble et couleur), sur la qualité microbiologique et sur la qualité organoleptique (essentiellement le goût).

Selon la présente invention, il a été trouvé un procédé de microfiltration tangentielle de la bière, qui ne présente pas les inconvénients précités. La présente invention vise en effet un procédé de microfiltration tangentielle de la bière, caractérisée en ce qu'on fait passer la bière à travers une membrane - éventuellement supportée - dont la perméabilité membranaire totale, mesurée à l'état neuf, est supérieure à $6 . 10^{-11}$ m³/m².

Selon l'invention, par bière à filtrer on entend la bière issue du réacteur de fermentation, moins éventuellement le fond de cuve, ou la bière de garde, ladite bière étant avec ou sans alcool.

La perméabilité membranaire est mesurée selon la norme AFNOR X 45 101.

Les membranes utilisables peuvent être des membranes organiques ou inorganiques constituées :
- d'un support poreux homogène ou asymétrique (c'est-à-dire d'une superposition de couches de porosité décroissantes), sous forme multitubulaire (voir par exemple FR-A 2.228 518, US. A 4. 341.631 et EP-A 025 349) ou sous la forme d'un bloc monolithique comme par exemple celui décrit dans US. A 4. 069.157 et EP-A 470.340,
- et d'une couche séparatrice perméable assurant la séparation entre filtrat et perméat, dont les diamètres dans le cadre de la présente invention sont de préférence compris entre 2,5 et 5 μm déterminés selon la méthode du Coulter Porometer automatisée selon les normes ASTM F 316 - 80 et BS 64.

Les supports sont généralement choisis parmi le carbone, les métaux et les oxydes métalliques, principalement la zircone, l'alumine et l'oxyde de titane.

Les membranes utilisables peuvent être également des membranes organiques, essentiellement asymétriques, formées par exemple par des polymères fluorés tels que le polyfluorure de vinylidène (PVDF), le polychlorotrifluoroethylène, les copolymères de dichlorodifluoroéthylène et le chlorotrifluoroethylène, les polysulfones aromatiques, les polyethersulfones, les polysulfones sulfonés (US- A 3.709.841 et US-A 4.207.182).

Ces membranes peuvent être greffées par un monomère ou un autre polymère, par exemple une membrane en PVDF peut être traitée par un polymère hydrophile (polyacétate de cellulose ou polyarylether sulfonée), conformément à l'enseignement de US-A 4.810.384.

Ces membranes peuvent être tendues sur des supports adaptés pour leur conférer une géométrie plane, en spirale ou tubulaire ou de typeautosupporté comme par exemple les fibres creuses. Les diamètres des pores de ces membranes organiques sont - comme pour les membranes inorganiques - compris entre 2,5 et 5 $\mu$m et déterminés selon la même méthode indiquée ci-dessus.

Selon l'invention, on a pu mettre en évidence que le procédé de microfiltration tangentielle est plus particulièrement performant sur le plan technique et économique, dans le cas où l'on utilise un module de microfiltration qui met en oeuvre le procédé de l'invention puisqu'il permet d'obtenir des flux de bière moyens, compris entre 100 et 250 - de préférence entre 130 et 180 $lh^{-1}m^{-2}$.

Par flux moyen de bière obtenu, on entend la moyenne intégrale du flux de perméat, pendant un temps donné. En effet, en raison du colmatage au cours du temps de la membrane, ce flux est une fonction décroissante du temps et implique des opérations fréquentes de décolmatage dont la fréquence, pour que le procédé demeure économiquement rentable, doit être supérieure à environ 1h, de préférence supérieure à 2h.

Les méthodes de décolmatage utilisables sont notamment l'inversion du flux de perméat ou l'inversion instantanée de la pression transmembranaire.

Selon un mode de mise en oeuvre préféré du procédé de l'invention, on utilise des membranes dont l'épaisseur totale (support compris) est inférieure ou égale à 0,5mm. Par épaisseur, on entend l'épaisseur du (ou des) matériau(x) séparant le filtrat du rétentat.

Selon ce mode de mise en oeuvre, la résistance hydraulique totale est essentiellement due à la membrane de filtration, et non au support de ladite membrane.

Lorsque, selon l'invention, on parle d'une membrane mince, éventuellement supportée, dont l'épaisseur totale est au plus de 0,5mm, on entend par épaisseur totale l'épaisseur de la membrane proprement dite et de son support. Cette épaisseur est de préférence inférieure à 0,1mm. Il n'existe pas de limites théoriques inférieures. Ces limites découlent de la résistance des différents matériaux constituant les membranes.

La bière à traiter est placée dans une boucle de microfiltration comportant un module de microfiltration. La circulation dans cette boucle est assurée par une pompe qui fixe le débit, la pression d'alimentation étant réglée à l'aide d'une vanne de contre-pression ou d'une deuxième pompe extérieure à la boucle qui l'alimente.

Lorsqu'on laisse le côté perméat du module à pression constante (pas de circulation du perméat), le mode de fonctionnement de la filtration est dit "*en ruissellement*". On récupère le perméat par gravité, en bas du module tubulaire ou par débordement en haut dudit module. On peut également assurer un fonctionnement à co-courant par mise en circulation du perméat dans une deuxième boucle: le circuit perméat est alors rempli de liquide et la récupération du flux s'effectue au point haut du circuit. Dans le cas du co-courant, le meilleur régime de fonctionnement consiste à égaliser la différence de pression transmembranaire le long de la membrane, ce qui permet de filtrer le produit dans les mêmes conditions, quel que soit l'endroit dans le module.Le réglage du débit de circulation et de la pression dans cette deuxième boucle est analogue à celui utilisé pour la première. Pour la mise en oeuvre du procédé co-courant, on recommande d'utiliser les procédés et les dispositifs décrits dans FR-A 2.262 910, FR-A. 2.295 777 (= US. A 4.105 547) et EP-A 333 753.

Selon un mode de réalisation préféré, la bière à traiter (rétentat) circule à l'intérieur du module en régime turbulent.

Dans la majorité des cas et des géométries des modules d'ultrafiltration, ce régime turbulent est atteint pour une valeur du nombre de Reynolds supérieure à 2000.

De façon à assurer la stabilité microbiologique de la bière, il est recommandé de la pasteuriser. Cette pasteurisation peut être effectuée par une étape distincte de la microfiltration tangentielle au moyen de procédés connus, déjà utilisés en brasserie, tels que la flash pasteurisation sur échangeur à plaques.

Toutefois, selon l'invention - et en règle générale - la microfiltration tangentielle assure également une réduction des contaminants des bières, sans traitement thermique, car elle permet d'abaisser en dessous d'un seuil critique, d'une part la teneur en levures - notamment du type saccharomyces - et, d'autre part, la teneur de certains micro-organismes altérant la qualité que sont les bactéries lactiques, pediocoques et autres.

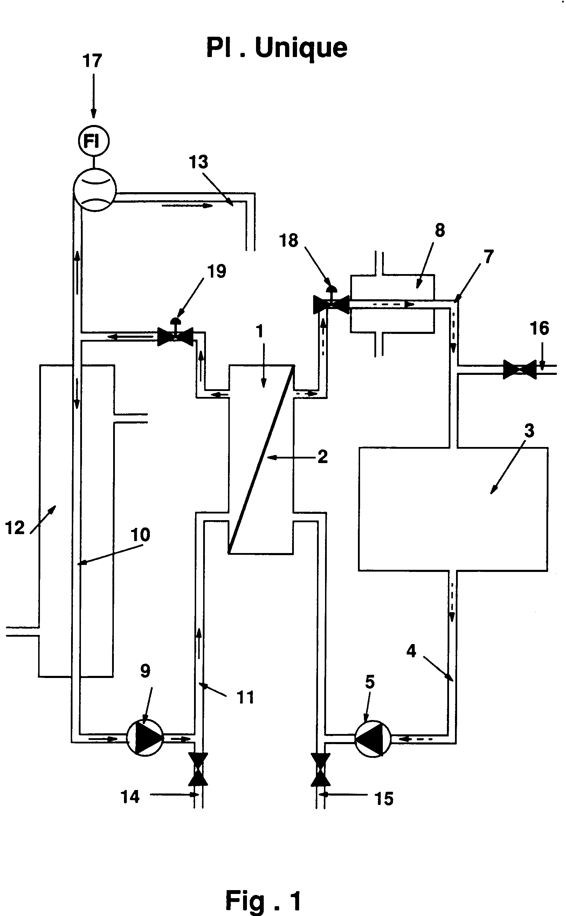

Les exemples suivants illustrent l'invention sans en limiter la portée. Référence sera faite au dessin annexé, sur lequel la figure 1 indique un schéma de circuit de microfiltration tangentielle.

**Exemples 1 et 2 et comparatifs 3 à 5 :**

On utilise un montage de laboratoire tel que schématisé sur la figure 1, sur laquelle on voit un module de microfiltration 1 à co-courant, comportant une membrane 2 plane polymère en PVDF (difluorure de polyvinylidène) - dénommée IRIS 530 - commercialisée par la Société TECH-SEP.

L'épaisseur de la membrane est de 0,3mm et sa surface est de 0,013 m$^2$.

La bière à filtrer (bière de luxe de marque Terken, soutirée en fin de garde) est stockée dans le réservoir 3 et est introduite dans le module par le tube 4 et la pompe positive 5 qui fixe le débit ; la bière passe dans le module 1 côté rétentat et retourne dans le bac 3 par le tube 7 comportant un réfrigérant 8 qui maintient la bière à la température souhaitée et une vanne motorisée 18 qui règle la pression.

De la même façon, le perméat filtré circule à co-courant de l'autre côté de la membrane à l'aide d'une pompe 9 et d'un tube 10, muni du réfrigérant 12 et de la vanne 19. La bière filtrée est récupérée par débordement à l'aide de l'évacuation 13.

Le circuit de microfiltration comporte en outre les sorties à l'égout 14, 15, 16 nécessaires à la gestion des circuits de fluide pendant l'essai.

Phase de démarrage :

l'installation est stabilisée sous eau avant d'alimenter le module en bière, à partir du réservoir 3. Les critères de stabilité sont essentiellement les débits, pressions et températures. On alimente alors le circuit rétentat en bière qui ne sera recyclée que lorsque l'eau aura été complètement chassée dudit circuit rétentat.

En phase de démarrage, le circuit de perméat est rempli d'eau pour, d'une part éviter la rupture de la membrane au démarrage et, d'autre part, pour l'établissement du co-courant et la connaissance du flux de perméat au moment où on alimente en bière. Ce flux est mesuré en continu à l'aide du débitmètre 17. Dans le tableau 1 ci-après, est indiqué le flux moyen de filtration obtenu pour 1 heure de fonctionnement.

Le trouble de la bière ainsi que le degré "Régie" alcoolique sont mesurés selon la norme EBC, 1987, IVième édition; Revue de la brasserie et des boissons, 277 p. CH-8047, Zurich, Suisse.

Chaque exemple est la moyenne des résultats de 5 essais différents, réalisés dans des conditions identiques. La bière filtrée est une bière de garde.

Du tableau 1 ci-après, il apparaît qu'on obtient une bière avec des flux acceptables et une qualité (trouble EBC) convenable en utilisant une membrane ayant une perméabilité membranaire conforme à l'invention. De plus, les résultats sont encore améliorés si le régime est turbulent.

**Exemple 6 et exemple comparatif 7 :**

Selon l'exemple 6 on répète exactement l'exemple 2, sauf qu'on mesure d'autres caractéristiques de la bière que l'on compare à celles de l'exemple comparatif 7, lequel donne les valeurs de ces mêmes caractéristiques pour une même bière de départ, mais traitée par le procédé classique utilisant du Kieselguhr.

Chaque exemple est la moyenne des résultats de 5 essais différents, réalisés dans des conditions identiques à celles de l'exemple 2.

Dans le tableau 2, les caractéristiques sont mesurées par les méthodes suivantes :

Matières sèches (MS)

On sèche à 105°C pendant 14 h, 10 ml de bière.

La teneur en matières sèches est définie par la formule :

$$MS = \frac{P2 \times 100}{P1}$$

MS :  pourcentage poids pour poids de matières sèches (g).

P1 :  poids de 10 ml de bière (g)

P2 :  poids obtenu après séchage (g)

Amertume UA

L'évaluation de la teneur en substances amères de la bière, constituée principalement d'acides iso-alpha, est réalisée par spectrophotométrie.

La bière est acidifiée et les matières amères sont extraites à l'iso-octane. On mesure l'absorbance de la couche d'iso-octane pur, conformément à la norme Analytica EBC, 1987 précitée.

UA : Amertume (unités EBC)
$A_{275}$ Absorbance à 275 nm

Polyphénols totaux (P)

La teneur en polyphénols totaux est déterminée par électrophotométrie. Après traitement de l'échantillon par une solution de carboxyméthylcellulose et d'EDTA, on fait réagir les polyphénols avec des ions ferriques en solution alcaline. On mesure l'absorbance de l'échantillon à 600 nm, par rapport à un blanc contenant les réactifs utilisés selon la norme Analytica EBC, 1987 précitée.

$$P = A \times 820 \times \delta$$

P : Teneur en polyphénols totaux ($mgl^{-1}$)
A : Absorbance à 600 nm
$\delta$ : Facteur de dilution

Sucres totaux :

La concentration en sucres totaux est déterminée par la méthode phénol sulfurique de Dubois et al, 1956 "colorimetrie method for determination of sugars and related substances", Anal. Them., 28, 350 - 356.

Azote total et azote aminé libre:

La teneur en azote total est obtenue par la méthode de Kjeldahl. Les ions ammonium sont dosés par la méthode indophénolique de Berthelot. L'absorbance est mesurée à 635 nm (Scheiner 1976).
La concentration en azote aminé libre est déterminée par la méthode internationale colorimétrique à la ninhydrine, selon la norme Analytica EBC, 1987 précitée.

**La couleur de la bière** est également évaluée suivant la norme EBC précitée

Les résultats sont assemblés dans le tableau 2 ci-après.
Du tableau 2, selon les critères retenus, la bière filtrée selon l'invention est d'une qualité physico-chimique comparable à la bière filtrée en usine selon le procédé traditionnel utilisant de la Kieselguhr.

## TABLEAU 1

| EXEMPLE D'ESSAI | N° 1 | N° 2 | N° 3 | N° 4 | N° 5 |
|---|---|---|---|---|---|
| Type de membrane | 530 | 530 | 508 | 515 | 560 |
| Porosité moyenne µm | 3,0 | 3,0 | 0,8 | 1,5 | 6,0 |
| Turbulence du rétentat (nb de Reynolds) | < 2000 | > 2000 | > 2000 | > 2000 | > 2000 |
| Perméabilité moyenne de la membrane à l'état neuf ($10^{-11}$ m3/m2) | 8,1 | 8,1 | 0,3 | 1,7 | 9,3 |
| Flux moyen de perméat sur 1hl/h-m$^2$ | 150 ± 5 | 280 ±10 | 0 | 5 ± 1 | 240 ± 10 |
| Trouble de la bière (norme EBC) | 0,42 | 0,34 | - | - | - |
| Degré "Régie" (norme EBC) | 5.2 ± 0,1 | 5.1± 0,1 | - | - | - |

± : Correspond à l'intervalle de confiance à 95 %

EP 0 671 466 A1

## TABLEAU 2

| Matière sèche MS | | Amertume UA (Norme EBC) | | Polyphénols P (mg/l) | | Sucres totaux | | Acides aminés (mg/l) | | Azote total (mg/l) | | Couleur (norme EBC) | |
|---|---|---|---|---|---|---|---|---|---|---|---|---|---|
| Ex. 7 | Ex. 6 | Ex. 7 | Ex. 6 | Ex. 7 | Ex. 6 | Ex. 7 | Ex. 6 | Ex. 7 | Ex. 6 | Ex. 7 | Ex. 6 | Ex. 7 | Ex. 6 |
| BFU | BFI | BFU | BFI | BFU | BFI | BFU | BFI | BFU | BFI | BFU | BFI | BFU | BFI |
| 4,1 ± 0,2 | 4,3 ± 0,3 | 25,9 ± 1,4 | 24,5 ± 2,6 | 188,9 ± 11,4 | 196,4 ± 10,5 | 37,8 ± 2,2 | 40,4 ± 4,6 | 54,7 ±10,4 | 49,0 ± 5,2 | 53,4 ±10 | 52,3 ± 18 | 7,8 ± 0,6 | 8,6 ± 1,6 |

± : Correspond à l'intervalle de confiance à 95 %

BFU = Bière filtrée selon le procédé traditionel (Kieselguhr)

BFI = Bière filtrée selon l'invention

EP 0 671 466 A1

**Revendications**

**1-** Procédé de microfiltration tangentielle de la bière, caractérisée en ce qu'on fait passer la bière à travers une membrane mince - éventuellement supportée - dont la perméabilité membranaire totale est supérieure à $6 . 10^{-11}$ m$^3$ / m$^2$ et dont la porosité est simultanément comprise entre 2,5 et 5 $\mu$m.

**2-** Procédé selon la revendication 1, caractérisé en ce que la bière est choisie parmi la bière issue du réacteur de fermentation, moins éventuellement le fond de cuve ou la bière de garde ladite bière étant avec ou sans alcool.

**3-** Procédé selon l'une quelconque des revendications précédentes, caractérisé en ce que la bière passe selon le procédé à co-courant dans un module de microfiltration.

**4-** Procédé selon l'une quelconque des revendications précédentes, caractérisé en ce que la bière à traiter (rétentat) circule en régime turbulent.

**5-** Procédé selon l'une quelconque des revendications précédentes, caractérisé en ce que le flux moyen de bière est compris entre 100 et 250, de préférence entre 130 et 180 lh$^{-1}$ m$^{-2}$.

**6-** Procédé selon l'une quelconque des revendications précédentes, caractérisé en ce que l'épaisseur totale de la membrane éventuellement asymétrique est inférieure ou égale à 0,5 mm.

# PI . Unique

Fig . 1

Office européen
des brevets

**RAPPORT DE RECHERCHE EUROPEENNE**

Numero de la demande

EP 95 40 0090

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US,A,4 943 374 (H-U. HEINIGER ET AL.) <br> * revendications * <br> --- | 1,2,5,6 | C12H1/06 |
| A | DE,A,42 04 708 (FUJI PHOTO FILM CO., LTD.) <br> * revendications * <br> --- | 1,2,5 | |
| A | EP,A,0 208 450 (APV INTERNATIONAL LIMITED) <br> * page 7, ligne 11 - ligne 30; revendications * <br> --- | 1 | |
| A | WO,A,88 03829 (ALFA-LAVAL FOOD ENGINEERING AB) <br> * revendications; figures * <br> --- | 1-3 | |
| A | EP,A,0 457 611 (KIRIN BEER KABUSHIKI KAISHA) <br> ----- | | |

| | | | DOMAINES TECHNIQUES RECHERCHES (Int.Cl.6) |
|---|---|---|---|
| | | | C12H |

Le présent rapport a été établi pour toutes les revendications

| Lieu de la recherche | Date d'achèvement de la recherche | Examinateur |
|---|---|---|
| LA HAYE | 14 Juin 1995 | Bevan, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)